# EUROPÄISCHE PATENTANMELDUNG

(11) **EP 0 803 418 A1**
(43) Veröffentlichungstag der Anmeldung: **29.10.1997**
(21) Anmeldenummer: 97104906.9
(22) Anmeldetag: 22.03.1997
(51) Int. Cl.: B60T 1/087, F16D 57/04

(54) **Antriebseinheit mit einem Motor und einem Retarder**

(30) Priorität: 25.04.1996 DE 19616427
(71) Anmelder: Voith Turbo GmbH & Co. KG, 89522 Heidenheim (DE)
(72) Erfinder: Vogelsang, Klaus, 74564 Crailsheim (DE); Friedrich, Jürgen, 74564 Crailsheim (DE); Heilinger, Peter, 74564 Crailsheim (DE); Mondorf, Karl, 74564 Crailsheim (DE)
(74) Vertreter: Weitzel, Wolfgang, Dr.-Ing.

(57) **Zusammenfassung**

Die Erfindung betrifft eine Antriebseinheit
mit einem hydrodynamischen Retarder ;
der Retarder umfaßt ein Rotorschaufelrad und ein Statorschaufelrad, sowie einen diese beiden umschließende Wand;
einen Kühlmittelkreislauf, dessen Kühlmittel zugleich Arbeitsmittel des Retarders ist;
es ist ein Arbeitsmediumbehälter vorgesehen, der in den Kühlkreislauf geschaltet ist;
zwischen Arbeitsmediumbehälter und dem hydrodynamischen Zentrum des Retarders ist eine Verbindungsleitung geschaltet;
in der Verbindungsleitung befindet sich ein Ventil.

## Beschreibung

Die Erfindung betrifft eine Antriebseinheit mit einem Motor, einem Retarder und einer Pumpe. Eine solche Antriebseinheit ist aus DE 37 13 580 C1 bekannt geworden.

Bei dieser bekannten Antriebseinheit dient der Retarder dazu, im Kühlmittelkreislauf das Kühlmittel der Fahrzeug-Kühlanlage sowohl im normalen Traktionsbetrieb als auch im Dauerbremsbetrieb umzuwälzen ("Wasserpumpen-Retarder"). Dabei wird dieser Retarder durch eine geeignete Ventilanordnung derart gesteuert, daß er im Bedarfsfalle auch Bremsarbeit leisten kann. Bei der Funktion "Pumpen" soll die Leistungsaufnahme möglichst gering sein, während sie bei der Funktion "Bremsen" möglichst hoch sein soll. Die technischen Anforderungen sind somit sehr gegensätzlich. Dies führt dazu, daß die Funktion "Pumpen" nicht effektiv genug arbeitet, weil nämlich hierbei zu viel Leistung aufgenommen wird.

Trennt man hingegen die beiden Funktionen baulich, indem man außer dem Retarder eine separate Pumpe vorsieht, so lassen sich zwar Retarder und Pumpe derart auslegen, daß die Funktionen optimal erfüllt werden. Jedoch hat ein solches System einen hohen Raumbedarf. Dies ist nachteilig, da der Raum in Fahrzeugen gerade an der betreffenden Stelle sehr beengt ist.

Der Vollständigkeit halber sollen noch die folgenden Dokumente erwähnt werden:

Der aus der US 3 720 372 bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE 33 01 560 C1 ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 19 46 167 bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

EP 0 707 140 A1 beschreibt eine Antriebseinheit mit einem Motor und einem hydrodynamischen Retarder. Dabei ist zum Fördern des Kühlmittels ein Pumpenlaufrad vorgesehen, das axial zum Rotorschaufelrad des Retarders angeordnet ist.

Bei den bisher bekannten Retardern tritt im Nicht-Bremsbetrieb eine gewisse Verlustleistung auf. Der Retarder ist nämlich im Nicht-Bremsbetrieb mit Luft gefüllt, außerdem auch mit einem Rest des Arbeitsmediums. Dies führt zu Ventilationsverlusten.

Der Erfindung liegt die Aufgabe zugrunde, eine Antriebseinheit der eingangs beschriebenen Art derart zu gestalten, daß Ventilationsverluste minimiert werden und daß der Retarder im Bremsbetrieb optimal arbeitet, d.h. daß das Bremsverhalten stetig und reproduzierbar ist.

Diese Aufgabe wird durch die Merkmale von Anspruch 1 gelöst.

Das im Anspruch 1 genannte Ventil wird im Nicht-Bremsbetrieb geschlossen. Da die Verbindungsleitung zwischen Betriebsmittelbehälter und Retarder im hydrodynamischen Zentrum des Retarders mündet, in dem ein Unterdruck herrscht, wird der Abschnitt der Verbindungsleitung zwischen dem genannten Ventil und dem hydrodynamischen Zentrum evakuiert; aus dem hydrodynamischen Zentrum und im gesamten Retarder-Arbeitsraum wird der Rest an Arbeitsmedium minimiert. Deswegen wird die Leistungsaufnahme während des Nicht-Bremsbetriebes minimiert.

Beim Bremsbetrieb wird das genannte, in der Verbindungsleitung befindliche Ventil geöffnet. Dadurch, daß eine leitende Verbindung zwischen dem Arbeitsmediumbehälter und dem hydrodynamischen Zentrum des Retarders hergestellt ist, kann der Retarder sofort und sehr rasch mit der notwendigen Menge des Arbeitsmediums gefüllt werden, so daß die Bremswirkung ebenso schnell eintreten kann.

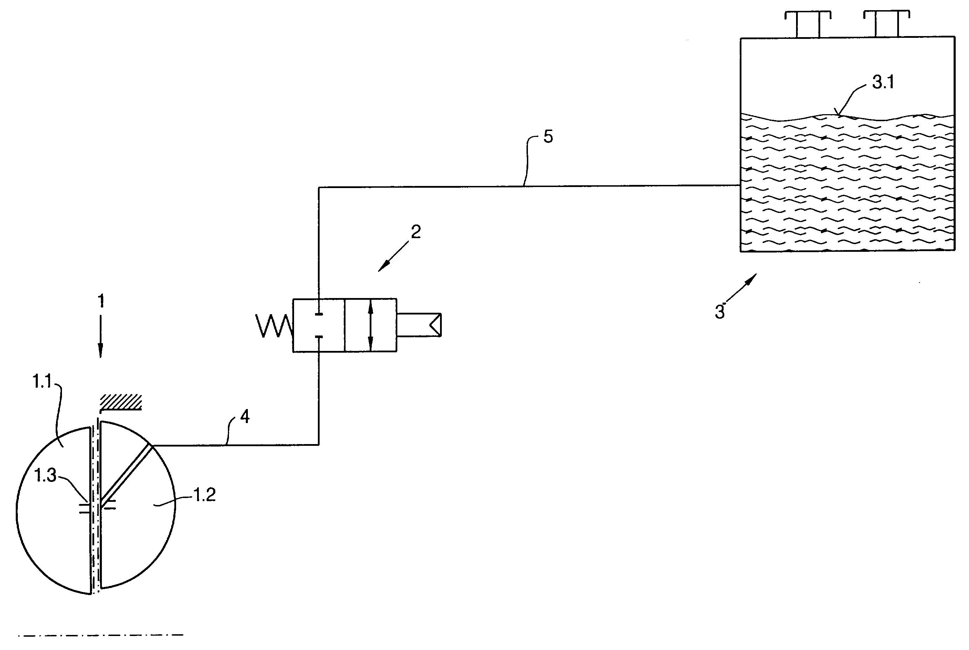

Die Erfindung ist anhand der Zeichnung näher erläutert. Man erkennt in schematischer Darstellung ein Bremssystem mit einem hydrodynamischen Retarder 1, einem Ventil 2 und einem Arbeitsmediumbehälter 3. Der Retarder 1 weist ein Rotorschaufelrad 1.1 und ein Statorschaufelrad 1.2 auf. Beide bilden einen Arbeitsraum miteinander, der ein hydrodynamisches Zentrum 1.3 aufweist.

Die drei Aggregate sind durch Leitungen miteinander verbunden. Zwischen Retarder 1 und Ventil 2 befindet sich eine Leitung 4. Zwischen Ventil 2 und Arbeitsmediumbehälter 3 befindet sich eine Leitung 5. Die Leitung 4 führt bis zum hydrodynamischen Zentrum 1.3, wobei sie im vorliegenden Falle durch das Statorschaufelrad 1.2 hindurchgeführt ist. Auch wäre es möglich, einen Anschluß über den Kreislaufspalt zwischen Rotorschaufelrad 1.1 und Statorschaufelrad 1.2 herzustellen. Ebenfalls wäre ein Anschluß durch das Retarderschaufelrad denkbar.

Die Leitung 5 mündet im vorliegenden Falle unter dem Spiegel 3.1 des Arbeitsmediums im Behälter 3.

Um im sogenannten Pumpbetrieb, d.h. in den Bremspausen, die Verlustleistung niedrig zu halten, muß die Restmenge der im Arbeitsraum vorhandenen Flüssigkeit minimiert werden. Dies geschieht gemäß der Erfindung dadurch, daß die leitende Verbindung zwischen dem Arbeitsmediumbehälter 3 und dem hydrodynamischen Zentrum 1.3 abgesperrt wird. Dies geschieht durch eine entsprechende Stellung des Ventils 2.0. Auch im Pumpbetrieb läuft das Rotorschaufelrad 1.1 weiter um. Hierdurch wird Arbeitsmedium aus dem Arbeitsraum gefördert. Aufgrund der genannten Stellung des Ventils 2.0 kann kein weiteres Arbeitsmedium nachströmen. Im Arbeitsraum entsteht daher ein Unterdruck, so daß auch nur eine verringerte Luftmenge im Arbeitsraum des Retarders 1 vorhanden ist. Deshalb werden die Ventilationsverluste miniminiert.

Für den Bremsbetrieb wird das Ventil 2 in eine solche Position gebracht, daß wieder eine leitende Verbindung zwischen Retarder 1 und Arbeitsmediumbehälter 3 hergestellt wird, und damit ein Potentialausgleich. Hierdurch wird in jeder Bremsphase ein reproduzierbares und optimal regelbares Bremsmoment erzeugt.

## Patentansprüche

1. Antriebseinheit
1.1 mit einem hydrodynamischen Retarder (1);
1.2 der Retarder (1) umfaßt ein Rotorschaufelrad (1.1) und ein Statorschaufelrad (1.2), sowie ein diese beiden umschließendes Gehäuse;
1.3 einen Kühlmittelkreislauf für eine Brennkraftmaschine, dessen Kühlmittel zugleich Arbeitsmittel des Retarders (1) ist;
1.4 es ist ein Arbeitsmediumbehälter (3) vorgesehen, der in den Kühlkreislauf geschaltet ist;
1.5 zwischen Arbeitsmediumbehälter (3) und dem hydrodynamischen Zentrum (1.3) des Retarders (1) ist eine Verbindungsleitung (4, 5) geschaltet;
1.6 in der Verbindungsleitung (4, 5) befindet sich ein Ventil (2).

2. Antriebseinheit nach Anspruch 1, dadurch gekennzeichnet, daß das Ventil (2) ein 2/2-Wege-Ventil ist.

3. Antriebseinheit nach Anspruch 1, dadurch gekennzeichnet, daß das Ventil (2) durch im System vorhandene Drücke schaltbar ist.
